# EUROPEAN PATENT APPLICATION

(11) **EP 3 920 530 A1**
(43) Date of publication of application: **08.12.2021**
(21) Application number: 19912586.5
(22) Date of filing: 22.10.2019
(51) Int. Cl.: H04N 7/15, H04N 7/14, H04N 21/242

(54) **CONTROL METHOD CAPABLE OF CONTROLLING MCU AND VIDEO CONFERENCE TERMINAL BY USING USER TERMINAL, AND VIDEO CONFERENCE SYSTEM FOR SAME**

(30) Priority: 28.01.2019 KR 20190010739
(71) Applicant: Uprism Co., Ltd., Gangnam-gu, Seoul 06168 (KR)
(72) Inventor: CHA, Min Soo, Seoul 05502 (KR)
(74) Representative: Habermann, Hruschka & Schnabel
(86) International application number: PCT/KR2019/013872
(87) International publication number: WO 2020/159037

(57) **Abstract**

A control method that can control an MCU and a video conference terminal using a user terminal, and a video conference system for the control method are proposed. The method of controlling a video conference of the present disclosure includes: a pairing request step in which the user terminal connects to the MCU in a wired or wireless type and then requests pairing with a target video conference terminal to the MCU; a pairing step in which the user terminal forms a control channel between the user terminal and the MCU in accordance with approval of the pairing request by the MCU; and a control step in which the user terminal requests one of control items allowed by the MCU to the MCU after the pairing step.

## Description

### Technical Field

The present disclosure relates to a method of controlling a video conference terminal and a video conference system for the method, the method being able to control a Multipoint Control Unit (MCU) for a video conference or a terminal of a specific video terminal using a user terminal without a user account.

### Background Art

A video conference system is generally classified into a standards-based video conference terminal (or system) that uses a standard protocol such as H.322 or Session Initiation Protocol and a nonstandard video conference terminal that uses its own protocol.

A standards-based video conference system requires a controller to configure a multi-video conference in which a plurality of video conference terminals (a plurality of points) is simultaneously connected. Although not necessary in a 1:1 video conference, a controller mixes videos provided by terminals into videos for points, respectively, and redistributes the videos for points. Accordingly, a standards-based video conference system includes a controller and at least one terminal connected to the controller. The controller is also usually referred to as an 'MCU (Multipoint Control Unit)'.

Although it is called a standards-based video conference system, there is no specifically defined protocol for a video conference between an MCU and a video conference terminal. Not only video or voice signals, but a Dual Tone Multi Frequency (DTMF) signal or a PTZ control signal for standard/nonstandard Far End Camera Control (FECC) can only be transmitted/received through a standard communication protocol between an MCU and a terminal. Accordingly, except for a video signal or a voice signal, a terminal can transmit a DTMF signal or a PTZ control signal generated by a remote controller or a button to an MCU, and can receive a DTMF signal or a PTZ control signal provided by the MCU.

An MCU provides an exclusive manager page for general controlling including controlling the MCU itself, a terminal of a specific video reference, or the conference room that a specific terminal participates in. The exclusive manager page is usually provided in a web page type. A manager page is used to generally manage an MCU, so it is required to designate different rights depending on user accounts in terms of security management. A super manager account of the highest level could control an MCU using all rights, but a common manager account created by the super manager enables a manager to control a system within the allowable right. Accordingly, there is a problem that all of users who connect to a manager page through an MCU have to have an account and the rights should be individually set.

Meanwhile, in order to control a video conference terminal in the related art, a wired or wireless remote controller that is exclusively used for the terminal is used. In general, a remote controller is connected to a terminal through infrared (IR) or wireless (RF) communication and has various buttons for controlling the terminal. However, there is slight limitation in smooth control due to the limit of the interface of a terminal and a remote controller.

Further, an MCU, though limitative, can provide various items of control including opening a conference room, participating in a conference, changing an image layout, controlling a terminal participating in another conference, controlling its terminal, etc. to a video conference terminal by transmitting and receiving a DTMF signal or a PTZ control signal. A user has to provide a predetermined code to the MCU by operating buttons of a remote controller or a terminal. The predetermined code may be at least one code selected from a DTMF signal or a PTZ control signal or a combination thereof, and the video conference terminal only transmits the code and does not know what the code is. When receiving a code from a terminal through a control channel, an MCU has no way to provide a menu image such as a manager page to a video conference terminal, so the MCU provides one piece of menu image video to the video conference terminal through a standard video channel such as H.323 or SIP. In this case, the menu image is only one video and simply shows various control items mapped to the DTMF signal or the PTZ control signal. Accordingly, it is required to prepare several pieces of menu images in order to configure a multi-step menu, which is one of the factors that increase the manufacturing cost of a video conference system. When a user presses a button of a remote controller or a terminal under the guidance of a menu image, the button signal is provided to the MCU and the MCU provides an additional menu video to a video conference terminal, if necessary. Not all MCU can provide this control method and this control method is unavoidably very limitative. Recently, video conference terminals that use digital terminals such as a smart control pad instead of common wired/wireless remote controller have been developed. Such video conference terminals also use a DTMF signal or a PTZ control signal for controlling, so the situation has not changed.

### Disclosure

### Technical Problem

An objective of the present disclosure is to provide a control method capable of controlling a Multipoint Control Unit (MCU) for a video conference or a specific video conference terminal using a user terminal without a user account.

Another objective of the present disclosure is to provide an application for a user terminal which can control an MCU for a video conference or a specific video conference terminal by being installed in a common user terminal, and a software distribution server that distributes the application.

### Technical Solution

In order to achieve the objectives of the present disclosure, the present disclosure provides a method of controlling a video conference of a user terminal that can connect to a video conference system including an MCU and at least one video conference terminal connected to the MCU. The method of controlling a video conference of a user terminal of the present disclosure includes: a pairing request step in which the user terminal connects to the MCU in a wired or wireless type and then requests pairing with a target video conference terminal to the MCU; a pairing step in which the user terminal forms a control channel between the user terminal and the MCU in accordance with approval of the pairing request by the MCU; and a control step in which the user terminal requests one of control items allowed by the MCU to the MCU after the pairing step. The user terminal is not directly connected to the target video conference terminal even by the pairing.

According to an embodiment, the method of controlling a video conference of a user terminal of the present disclosure may further include a step in which the user terminal, after the pairing step, uploads sharing data to be provided to the video conference by transmitting at least one of a document file, a video file, and a screen of the user terminal to be provided to the video conference to the MCU through the control channel, instead of the target video conference terminal.

### Pairing method according to pairing request

According to an embodiment, the pairing request step may include: a step in which the user terminal connects to the MCU in a wired or wireless type; a step in which the user terminal requests a pairing list to the MCU; a step in which the user terminal selects the target video conference terminal from the pairing list provided by the MCU and provides selection information to the MCU. In this case, pairing list is a list of video conference terminals that have transmitted a predetermined pairing-request code to the MCU of terminals connected to the MCU.

The pairing request step may further include a step in which the user terminal makes a user select the target video conference terminal by displaying the pairing list, which is periodically updated by the MCU in accordance with a request of the pairing list, to the user.

According to another embodiment, the pairing step may further include: a step in which the MCU provides pairing completion information using at least one signal selected from a video signal and a voice signal to the target video conference terminal and waits for a pairing-confirmation code; and a step in which the MCU approves the pairing request when receiving the pairing-confirmation code from the target video conference terminal.

According to another embodiment, the pairing list may be a list of video conference terminals that have transmitted predetermined identification information together with the pairing-request code to the MCU.

According to another embodiment, the pairing-request code may be provided in the type of a Dual Tone Multi Frequency (DTMF) or PTZ control signal. The pairing-request code may be provided in the type of a voice signal or may be provided when a predetermined video gesture is recognized.

### Pairing method using PIN number

According to an embodiment, the pairing request step may include: a step in which the user terminal receives a PIN number for pairing with the target video conference terminal; and a step in which the user terminal requests pairing with the target video conference terminal by providing the input PIN number to the MCU. In this case, the MCU approves the pairing request of the user terminal by comparing the PIN number with a pre-registered PIN number in the pairing step.

In this case, the PIN number is output through the target video conference terminal so that a user can input the PIN number to the user terminal. The MCU may receive a predetermined pairing-request code from the target video conference terminal, create the PIN number in response to the pairing-request code, and then provide the PIN number in the type of a video signal or a voice signal to the target video conference terminal using Interactive Voice and Video Response (IVVR). Alternatively, the PIN number may be received by the target video conference terminal from a user and then provided to the MCU.

According to another embodiment, in the step in which the user terminal receives a PIN number, the user terminal may directly receive a PIN number output from the target video conference terminal through an inputter or the user terminal may take a picture of a PIN number displayed as a video on the target video conference terminal.

The right range of the present disclosure also covers to a user terminal that performs the method of controlling a video conference terminal.

### Application for use terminal

The present disclosure also covers an application stored in a computer-readable storage medium to perform operation of the user terminal in the method of controlling a video conference.

### Software distribution server distributing application for user terminal

The present disclosure also covers a software distribution server including a computer-readable storage medium storing software performing operation of the user terminal of the method of controlling a video conference. The software distribution server may enable the user terminal to download the software when the user terminal connects to the Internet.

### MCU for video conference

The present disclosure also covers an MCU for controlling a video conference that is connected with at least one video conference terminal and processes a video conference, the MCU performing the method of controlling a video conference. The MCU of the present disclosure includes: a network connector performing wired or wireless connection with a user terminal; a video conference processor controlling a video conference connected with the at least one video conference terminal; and a pairing manager receiving a request for pairing with a target video conference terminal selected from the at least one video conference terminal from the user terminal.

The pairing manager forms a control channel between the user terminal and the MCU by approving the pairing request, and after pairing, provides control items requested by the user terminal to the video conference processor so that the target video conference terminal is controlled.

The pairing manager may provide one, which is selected from a document file, a video file, and a screen of the user terminal provided through the control channel from the user terminal, to the video conference processor as sharing data to be provided to the video conference that the target video conference terminal belongs to.

### Method of controlling video conference of MCU

The present disclosure also covers a method of controlling a video conference of an MCU of the present disclosure that controls a video conference. The method of controlling a video conference of an MCU according to the present disclosure includes: a step in which a terminal communication of the MCU is connected to the at least one video conference terminal; a pairing request step in which a pairing manager of the MCU receives a request for pairing with a target video conference terminal selected from the at least one video conference terminal from a user terminal; a pairing step in which the pairing manager forms a control channel between the user terminal and the MCU by approving the pairing request; and a step in which the pairing manager provides control items requested by the user terminal to a video conference processor of the MCU after the pairing step, and the video conference processor processes control of the target video conference terminal in accordance with the control items.

The present disclosure covers an application stored in a computer-readable storage medium to perform operation of the video conference processor and the pairing manager, that is, operation of the MCU. The present disclosure further covers a software distribution server including a computer-readable storage medium storing software performing operation of the MCU. The software distribution server may enable the MCU to download the software when the MCU connects to the Internet.

### Advantageous Effects

A video conference system according to the present disclosure proposes a method in which a user connects to a Multipoint Control Unit (MCU) using his/her user terminal and then controls a specific video conference terminal or performs control related to various video conferences allowed by the MCU. The user of the user terminal does not need to receive a user account designated to connect to the MCU and does not need to obtain a right for the control on the basis of a user account.

For example, since signals that a user can input using a standard video conference terminal are only Dual Tone Multi Frequency (DTMF) and PTZ control signals, existing MCUs provide entry to a video conference using Interactive Voice and Video Response (IWR), but do not support opening of a video conference. However, according to the present disclosure, even a user who does not have a user account can connect to an MCU and open a video conference using his/he terminal such as a mobile phone.

Since the user terminal can be any one as long as it can connect to a user's mobile phone or other MCUs in a wired or wireless type, a user can easily control a specific video conference terminal using his/her user terminal and can open a video conference or control a video conference itself through an MCU.

Further, it is possible to directly transmit specific documents related to a corresponding video conference to an MCU not through a video conference terminal. Accordingly, even though a video conference terminal does not has H.239 or a Binary Floor Control Protocol (BFCP), it is possible to easily share document files, video files, and the screen of a user terminal in a corresponding video conference using the present disclosure.

### Description of Drawings

FIG. 1 is a diagram showing the structure of a video conference system according to an embodiment of the present disclosure;
FIG. 2 is a block diagram of an MCU and a user terminal according to an embodiment of the present disclosure;
FIG. 3 is a flowchart provided to describe a pairing method using a pairing list of the present disclosure; and
FIG. 4 is a flowchart provided to describe a pairing method using a PIN number.

### Best Mode

Hereafter, the present disclosure is described in more detail with reference to the accompanying drawings.

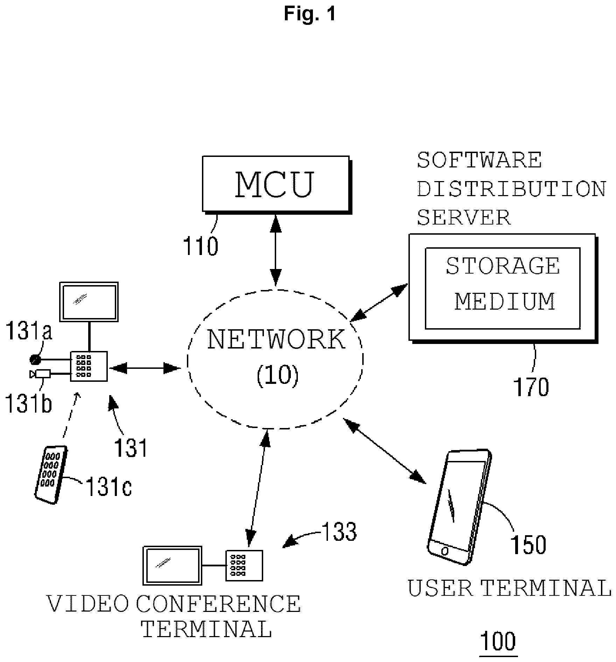

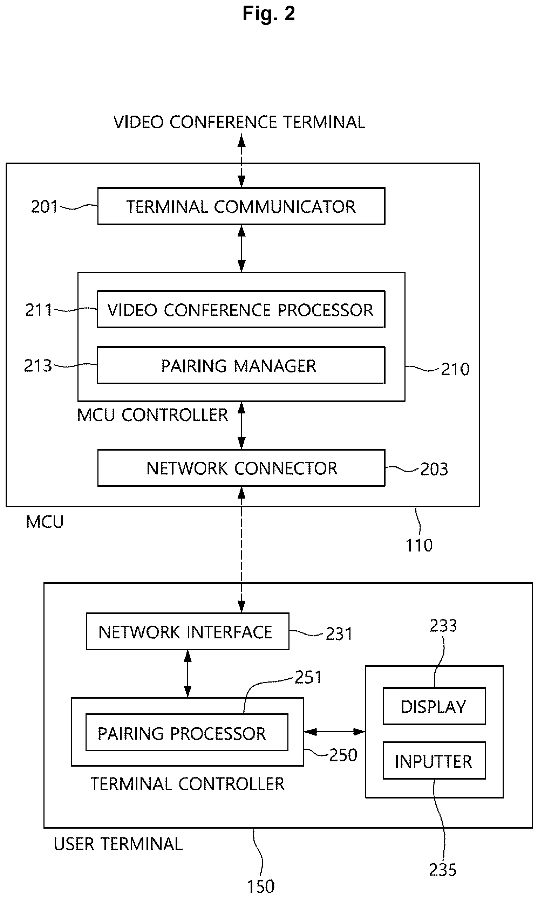

Referring to FIGS. 1 and 2, a video conference system 100 of the present disclosure includes an MCU 110, a video conference terminal 131, 133, and a user terminal 150. The video conference terminal 131 and 133 is video conference terminal that provides a video conference based on a standard protocol such as H.323 or Session Initiation Protocol (SIP) in the related art. Accordingly, the video conference terminal 131, 133 does not need to be added with a new function or to perform another function for the present disclosure. A microphone 131a and a camera 131b may be connected as external devices, as in a first video conference 131, and a microphone or a camera may be built-in devices, as in a second video conference terminal 133. The first video conference 131 is an example in which a remote controller 131c for user operation is connected.

The MCU 110 provides a multi-video conference in which a plurality of video conference terminals (a plurality of points) is simultaneously connected, and performs general control related to a video conference. Obviously, the MCU can also provide a 1:1 video conference. The MCU to which the present disclosure is applied may be any one as long as it is connected with the video conference terminal 131 through a standard protocol such as H.323 or SIP and can create and control a multi-video conference. It is exemplified in the following description that the MCU 110 and the video conference 131 transmit and receive control signals for various items of control in the type of a DTMF signal or a PTZ control signal, but the present disclosure is not necessarily limited thereto. Since the present disclosure relates to control through the user terminal 150, basic operations such as opening a video conference, a method of participating in a video conference, processing a video signal and a voice signal for a video conference, transmitting and receiving signals to and from the video conference terminal 131 by the MCU are not described.

Referring to FIG. 2, the MCU 110 includes a terminal communicator 201, a network connector 203, and an MCU controller 210 and is connected with the user terminal 150 through a wired or wireless network.

The terminal communicator 201 is a device that is connected with the video conference terminal 131, and a standard protocol such as H.323 or Session Initiation Protocol (SIP) is applied thereto.

The network connector 203 is a wired or wireless interface that is connected with the user terminal 150. Not only wireless LAN, Bluetooth, and Zigbee, but a mobile telephone network such as 3G, LTE, or 5G can be used as the wireless interface.

The MCU controller 210 includes a video conference processor 211 and a pair manager 213, controls general operation of the MCU 110, and provides a specific control page particularly to the user terminal 150.

The video conference opens a video conference in accordance with user control through the video conference terminal 131, the user terminal 150, or the manager page and distributes a video signal and a voice signal for the video conference to the terminal 131 of each video conference, thereby providing a multi-video conference.

The pairing manage 213 pairs a target video conference terminal and the user terminal 150 in accordance with a pairing request of the user terminal 150. The pairing means that a user terminal is connected to the manager page of the MCU 110 and does not mean that the user terminal 150 and the target video conference terminal are directly connected to each other. The target video conference terminal is a video conference terminal requested to be paired by the user terminal 150, and it is assumed that the first video conference terminal 131 is a 'target video conference terminal' shown in FIG. 1 in the following description.

The pairing manager 213 provides a manager page to the user terminal 150 after pairing and receives and transmits a control instruction based on the manager page from the user terminal 150 to the video conference processor 211 so that corresponding control is performed. The manager page, for example, may be web type.

The user terminal 150, which is a user terminal that connects to the MCU 110, may be any one as long as it is a digital terminal having a wired or wireless interface that can communicate with the network connector 203 of the MCU 110 such as a mobile phone, a persona digital terminal, a notebook, and a computer.

The user terminal 150 includes a network interface 231, a display 233, an inputter 235, and a terminal controller 250.

The network interface 231 is a wired or wireless interface that is connected with the network connector 203 of the MCU 110. However, when the user terminal 150 is a mobile device, a wireless interface is preferable, and the description referring to FIG. 2 and the latter figures is based on a wireless interface.

The display 233 is a device that displays various items of information in a visually recognizable type such as an LCD and an OLED, and the inputter 235 is a device for receiving control instructions input by a user. In general, the display 233 and the inputter 235 may be provided as a single device such as a touch screen.

The terminal controller 250 controls general operation of the user terminal 150 and particularly includes a pairing processor 251 to perform the pairing operation of the present disclosure.

The pairing processor 251 selects a target video conference terminal to be paired and then requests pairing with the target video conference terminal to the MCU 110, thereby performing a pairing process. Further, the pairing processor 251 controls various video conferences allowed to a user by pairing.

The pairing processor 251 may perform pairing that uses a pairing list and/or pairing that uses a PIN number, and displays control items according to pairing and receives control instructions through the display 233, and provides the control instructions to the pairing manager 213 of the MCU 110.

Control through pairing may include not only (1) control based on the target video conference terminal 131, but (2) common control of a video conference within a range allowed to a pairing user by the MCU 110.

(1) The control based on the target video conference terminal transmits, as a control item that is performed by the target video conference terminal, a control signal corresponding to the MCU 110 to the target video conference terminal in the type of a DTMF or PTZ control signal. Accordingly, the video conference terminal is limited to the allowed control.

(2) The common control of a video conference may be opening a video conference, entering of a target video conference terminal into an opened video conference, etc., and uploading a document file, a video file, and the screen of a user terminal to the video conference that the target video conference terminal belongs to.

### Pairing method using pairing list

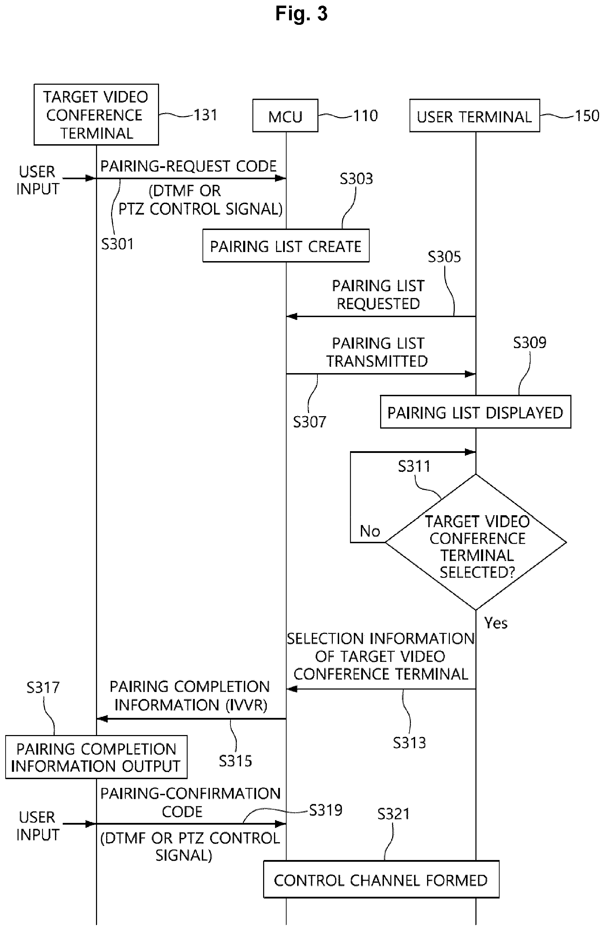

Hereafter, a pairing method using a pairing list is described with operation of the pairing processor 251 and operation of the MCU 110 and the video conference terminal 131 with reference to FIG. 3.

### <Creating pairing list : S301, S303>

In order to register a video conference terminal on a pairing list' to be described below, a user transmits a predetermined pairing-request code to the MCU 110 using a target video conference terminal 131 designated by the user (S30).

The pairing-request code, which is a code set to be provided to the MCU 110 from the video conference terminal 131, is provided to the MCU 110 in the type of a so-called input signal of the video conference terminal 131. In other words, there is no need for a specific component to transmit the pairing-request code to the MCU 110 and a user inputs the pairing-request code through a button, etc.

The input signal may be the type of a DTMF signal or a PTZ control signal that is generated when buttons of the video conference terminal 131 itself or buttons of a remote controller 131 connected to the video conference terminal 131, or may be a type recognizing a voice or a video provided from a user. In order to recognize a voice and a video, a predetermined voice waveform and video gesture may be input through the microphone 131a and the camera 131b installed in the video conference terminal 131.

Depending on embodiments, in order to register a pairing list, the MCU 110 may request predetermined identification information together with the pairing-request code from the video conference terminal 131. However, the identification information is separately defined for each video conference terminal 131 and is also provided in the type of a DTMF signal or PTZ control signal.

When receiving the pairing-request code from the video conference terminal 131, the pairing manager 213 of the MCU 110 records the pairing-request code on a 'pairing list', thereby preparing the pairing list (S303).

The pairing list is a list of the video conference terminal that has transmitted to the predetermined 'pairing-request code' to the MCU 110 of the video conference terminals connected to the MCU 110. The IP address, the extension number, the equipment name, etc. of the video conference terminal may be included in the pairing list.

The processes S301 to S303 may be repeated in a predetermined cycle.

### <Request of pairing: S305 to S313>

### <Requesting pairing list from MCU: S305>

When the user terminal 150 and the MCU 110 are wirelessly connected, and then the pairing processor 251 requests the 'pairing list' from the MCU 110 in accordance with a request from a user, whereby pairing request is started.

<Displaying pairing list and selecting target video conference terminal: S307, S309>

As the user terminal 150 requests the 'pairing list', the pairing manager 213 of the MCU 110 provides a pairing list to the user terminal 150 (S307).

The pairing processor 251 displays the pairing list provided by the MCU 110 on the display 233 and waits for selection of a user. The user selects his/her target video conference terminal from the list displayed on the display 233. Accordingly, for pairing, the user provides the pairing-request code to the MCU 110 by operating the first video conference terminal 131 through step S301 and is then provided with the pairing list using the user terminal 150. Since the first video conference terminal 131 operated by the user himself/herself is included in the pairing list, the user may select the first video conference terminal 131 as his/her 'target video conference terminal'.

### <Providing selection information of target video conference terminal: S313>

When a user selects a target video conference terminal, the pairing processor 251 provides the information about the video conference terminal selected by the user, that is, the target video conference terminal to the MCU 110, thereby finishing 'pairing request'.

### <Completion of pairing: S315 to S321>

When receiving the information about the target video conference terminal from the user terminal 150 through step S313, the pairing manager 213 of the MCU 110 provides pairing completion information to the video conference terminal 131 and waits for a pairing-confirmation code. The IP address of the user terminal 150, connection area information of the IP address, browser information, information about the user terminal 150, recognition information provided by the user terminal, or the like may be included in the pairing-completion information. The pairing completion information may be provided using Interactive Voice and Video Response (IWR) of a video signal or voice signal type, and the pairing-completion code is an input signal type the same as the pairing-request code (S315).

The target video conference terminal 131 outputs the pairing-completion information in a video or voice type, and provides the 'pairing-completion code' that is input from the user in response to output of the pairing completion information to the MCU 110 (S317, S319).

When receiving the pairing-confirmation code from the target video conference terminal 131, the pairing manager 213 of the MCU 110 approves the pairing request of the user terminal 150 and finishes the pairing process (S321).

Depending on embodiments, when the security level is not high, the pairing manager 213 of the MCU 110 may finish pairing with the video conference terminal without performing steps S315 to S319 when receiving selection information of the target video conference terminal through step S313.

When finishing pairing, the pairing manager 213 may allow operation according to completion of pairing to the user terminal 150. For example, when the user terminal 150 requests opening of a video conference, the request is provided to the video conference processor 211 to open a video conference.

In this way, pairing that uses a pairing list of the present disclosure is performed.

Meanwhile, step S301 is performed after step S305 in the embodiment shown in FIG. 3, but the present disclosure is not necessarily limited thereto. In other words, step S301 may be performed after step S305. The pairing manager 213 of the MCU 110 may provide a pairing list created after the request in step S305 to the user terminal 150 by periodically updating the pairing list.

When a control channel is created in step S321, various items of video conference control are allowed to the user terminal 150. For example, the user terminal 150 may transmit a document file, a video file, and the screen of the user terminal, etc. (hereafter, referred to as 'a document file, etc.') to the MCU 110 instead of the target video conference terminal 131. The pairing manager 213 of the MCU 110 transmits the document file, etc. to the video conference processor 211 such that the document file, etc. are displayed in the video conference that the target video conference terminal 131 participates in. The document file, etc. may be processed as if it is uploaded to be transmitted or displayed to each point of the video conference by the target video conference terminal 131. In detail, the method of processing the document file, etc. may be performed in an MCU device as in the related art.

### Pairing method using PIN number

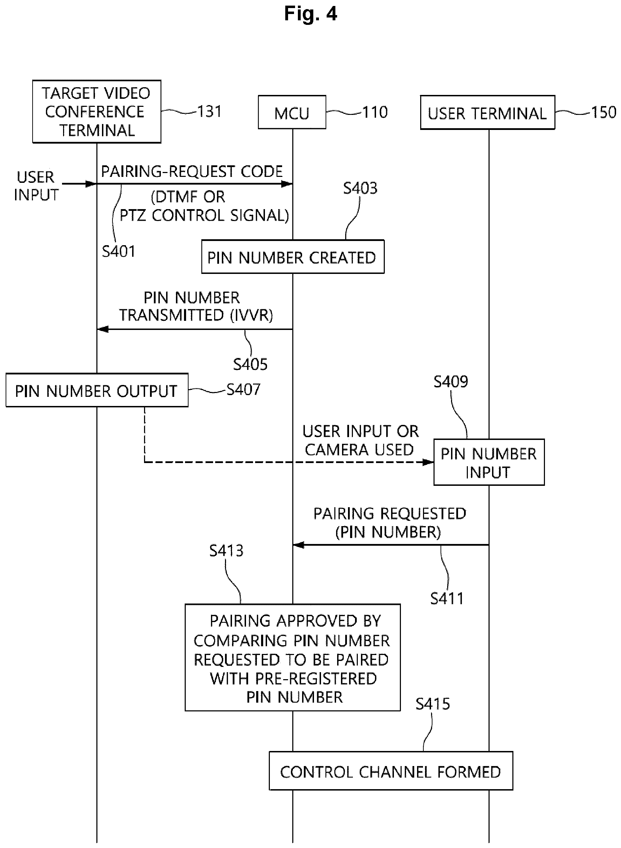

Hereafter, a pairing method using a PIN number is described with reference to FIG. 4.

### <Creating and displaying of PIN number: S401 to S407>

A user transmits a predetermined pairing-request code to the MCU 110 using the target video conference terminal 131 designated by himself/herself. The pairing-request code is the same as the pairing-request code used in step S301, but is not for creating a pairing list, but for requesting creation of a PIN number (S401).

The pairing manager 213 of the MCU 110 creates and registers a PIN number for the target video conference terminal 131 and provides the PIN number in the type of a video signal or a voice signal to the video conference terminal 131 using the IVVR function. The PIN number is not necessarily composed of numbers and may be a combination of various characters. As another embodiment, the PIN number may be implemented in a barcode or QR code type (S403, S405).

The target video conference terminal 131 outputs the PIN number received from the MCU 110 through the IVVR function into the type of a video or a voice (S407).

### <Request for pairing from user terminal using PIN number: S409, S411>

The user terminal 150 receives the PIN number output from the target video conference terminal 131. In general, a user can directly input the PIN number output in the type of a video or a sound from the target video conference terminal 131 or can read out the PIN number using a camera, etc.

The pairing processor 251 of the user terminal 150 provides the input PIN number to the MCU, thereby requesting pairing with the target video conference terminal 131 (S411).

### <Creating of control signal according to approval of pairing by MCU: S413>

The pairing manager 213 of the MCU 110 that receives the request for pairing with the target video conference terminal 131 together with the PIN number from the user terminal 150 compares the PIN number with the PIN number created in step S403, thereby approving the request for pairing with the user terminal 150 (S413).

When pairing is approved, a control channel is formed between the user terminal 150 and the MCU 110, as in step S321 (S415).

After approving pairing, the pairing manager 213 can notify both of the user terminal 150 and the target video conference terminal 131 of the approval of pairing. The pairing manager 213 may use the IVVR function when notifying the target video conference terminal 131 of the approval. The pairing manager 213 may form a control channel after receiving pairing confirmation through a process the same as steps S315 to S319 without immediately forming the control channel after approving pairing.

In this way, pairing that uses a PIN number of the present disclosure is performed.

### Embodiment 1 (Software distribution server)

Referring to FIG. 1, the video conference system 100 of the present disclosure may further include a software distribution server 170. The software distribution server 170 includes a computer-readable storage medium 171 and stores software for the pairing processor 251 of the user terminal 150. The user terminal 150 may connect to the software distribution server 170 through the network 10.

First, the terminal controller 250 of the user terminal 150 may be construed as a component specifically installed for the present disclosure, but, generally, may be a component installed to perform the main or fundamental functions (e.g., phone call, communication, etc.) of the user terminal 150. When the terminal controller 250 is a component installed to perform the fundamental factions of the user terminal 150, the terminal controller 150 may be a component that functionally indicating a configuration implemented by a processor chip, which is hardware fundamentally included in the user terminal 150, and an operating system (OS) program that is operated on the basis of the chip. In other words, terminals of the related art to which the present disclosure is not applied may also include the terminal controller 250.

The pairing processor 251 may be software or an application that is executed on the operating system program and installed in an existing user terminal to achieve the present disclosure. In other words, when the pairing processor 251 of the present disclosure is installed in an existing user terminal, the existing user terminal becomes the user terminal 150 of the present disclosure. The software distribution server 170 stores software-for pairing processor for the pairing processor 251.

A user may connect to the software distribution server 170 using the user terminal 150 and then download the software-for pairing processor (or an application), thereby being able to install the pairing processor 251.

### Embodiment 2 (MCU)

Similar to the terminal controller 250 of the user terminal 150, the MCU controller 210 of the MCU 110 may also be provided as a software type. Similarly, the software distribution server 170 may store and manage software for the MCU controller 210 of the MCU 110 in the storage medium 171. A computer system for the MCU connects to the software distribution server 170 through the network 10 and downloads software for the MCU controller 210 of the MCU 110, thereby becoming the MCU 110 of the present disclosure.

Although exemplary embodiments of the present disclosure were illustrated and described above, the present disclosure is not limited to the specific exemplary embodiments and may be modified in various ways by those skilled in the art without departing from the scope of the present disclosure described in claims, and the modified examples should not be construed independently from the spirit of the scope of the present disclosure.

## Claims

1. A method of controlling a video conference of a user terminal that can connect to a video conference system including an MCU and at least one video conference terminal connected to the MCU, the method comprising:
a pairing request step in which the user terminal connects to the MCU in a wired or wireless type and then requests pairing with a target video conference terminal to the MCU;
a pairing step in which the user terminal forms a control channel between the user terminal and the MCU in accordance with approval of the pairing request by the MCU; and
a control step in which the user terminal requests one of control items allowed by the MCU to the MCU after the pairing step.

2. The method of claim 1, further comprising a step in which the user terminal, after the pairing step, uploads sharing data to be provided to the video conference by transmitting at least one of a document file, a video file, and a screen of the user terminal to be provided to the video conference to the MCU through the control channel, instead of the target video conference terminal.

3. The method of claim 1, wherein the pairing request step includes:
a step in which the user terminal connects to the MCU in a wired or wireless type;
a step in which the user terminal requests a pairing list to the MCU, in which the pairing list is a list of video conference terminals that have transmitted a predetermined pairing-request code to the MCU of terminals connected to the MCU; and
a step in which the user terminal provide selection information of the target video conference terminal selected from the pairing list provided by the MCU to the MUC.

4. The method of claim 3, wherein the pairing request step further includes a step in which the user terminal makes a user select the target video conference terminal by displaying the pairing list, which is periodically updated by the MCU in accordance with a request of the pairing list, to the user.

5. The method of claim 3, wherein the pairing step further includes:
a step in which the MCU provides pairing completion information using at least one signal selected from a video signal and a voice signal to the target video conference terminal and waits for a pairing-confirmation code; and
a step in which the MCU approves the pairing request when receiving the pairing-confirmation code from the target video conference terminal.

6. The method of claim 3, wherein a list of video conference terminals that have transmitted predetermined identification information together with the pairing-request code to the MCU is included in the pairing list.

7. The method of any one of claims 3 to 5, wherein the pairing-request code is provided in the type of a Dual Tone Multi Frequency (DTMF) or PTZ control signal.

8. The method of any one of claims 3 to 5, wherein the pairing-request code is provided in the type of a voice or video signal.

9. The method of claim 1,wherein the pairing request step includes:
a step in which the user terminal receives a PIN number for pairing with the target video conference terminal, in which the PIN number is output through the target video conference terminal; and
a step in which the user terminal requests pairing with the target video conference terminal by providing the input PIN number to the MCU, and
the MCU approves the pairing request of the user terminal by comparing the PIN number with a pre-registered PIN number in the pairing step.

10. The method of claim 9, wherein the MCU receives a predetermined pairing-request code from the target video conference terminal, creates the PIN number in response to the pairing-request code, and then provides the PIN number in the type of a video signal or a voice signal to the target video conference terminal using Interactive Voice and Video Response (IWR) .

11. The method of claim 10, wherein in the step in which the user terminal receives a PIN number, the user terminal directly receives a PIN number output from the target video conference terminal through an inputter or the user terminal takes a picture of a PIN number displayed as a video on the target video conference terminal.

12. The method of claim 10, wherein the pairing-request code is provided in the type of a Dual Tone Multi Frequency (DTMF) or PTZ control signal.

13. The method of claim 10, wherein the pairing-request code is provided in the type of a voice signal or is provided when a predetermined video gesture is recognized.

14. The method of claim 9, wherein the PIN number is received by the target video conference terminal from a user and then provided to the MCU.

15. A user terminal performing the method of controlling a video conference of any one of claims 1 to 6, and 9 to 14.

16. An application stored in a computer-readable storage medium for performing operation of the user terminal in the method of controlling a video conference of any one of claims 1 to 6, and 9 to 14.

17. A software distribution server comprising a computer-readable storage medium storing software for performing operation of the user terminal in the method of controlling a video conference of any one of claims 1 to 6, and 9 to 14, and enabling the user terminal to download the software when the user terminal connects through the Internet.

18. An MCU for controlling a video conference which is connected to at least one video conference terminal and processes a video conference, the MCU comprising:
a terminal communicator connected to the at least one video conference terminal;
a network connector performing wired or wireless connection with a user terminal;
a video conference processor controlling a video conference connected with the at least one video conference terminal; and
a pairing manager receiving a request for pairing with a target video conference terminal selected from the at least one video conference terminal from the user terminal,
wherein the pairing manager forms a control channel between the user terminal and the MCU by approving the pairing request, and after pairing, provides control items requested by the user terminal to the video conference processor so that the target video conference terminal is controlled.

19. The MCU of claim 18, wherein the pairing manager provides one, which is selected from a document file, a video file, and a screen of the user terminal provided through the control channel from the user terminal, to the video conference processor as sharing data to be provided to the video conference that the target video conference terminal belongs to.

20. The MCU of claim 18, wherein the pairing manager
manages a list of video conference terminals that have transmitted a predetermined pairing-request code of the at least one video conference terminal as a pairing list, and
determines that there is the pairing request when receiving a request to provide the pairing list, providing the pairing list, and then receiving selection information about the target video conference terminal selected from the pairing list from the user terminal.

21. The MCU of claim 20, wherein the pairing manager approves the pairing request when providing pairing completion information using at least one signal selected from a video signal and a voice signal to the target video conference, waiting for a pairing-confirmation code, and then receiving the pairing-confirmation code from the target video conference terminal.

22. The MCU of claim 20, wherein a list of video conference terminals that have transmitted predetermined identification information is included together with the pairing-request code in the pairing list.

23. The MCU of claim 18, wherein when receiving a pairing-request code from the target video conference terminal, the pairing manager creates and registers a PIN number corresponding to the pairing-request code and the provides the PIN number to the target video conference terminal such that the PIN number is output; and
when receiving the pairing request including the PIN number from the user terminal, the pairing manager approves pairing by comparing the PIN number with the registered PIN number.

24. The MCU of claim 23, wherein the pairing manager provides the PIN number in the type of video signal or a voice signal to the target video conference terminal using Interactive Voice and Video Response (IVVR).

25. A method of controlling a video conference of an MCU connected to at least one video conference terminal, the method comprising:
a step in which a terminal communication of the MCU is connected to the at least one video conference terminal;
a pairing request step in which a pairing manager of the MCU receives a request for pairing with a target video conference terminal selected from the at least one video conference terminal from a user terminal;
a pairing step in which the pairing manager forms a control channel between the user terminal and the MCU by approving the pairing request; and
a step in which the pairing manager provides control items requested by the user terminal to a video conference processor of the MCU after the pairing step, and the video conference processor processes control of the target video conference terminal in accordance with the control items.

26. The method of claim 25, further comprising a step in which the pairing manager receives one selected from a document file, a video file, and a screen of a user terminal through the control channel from the user terminal and then provides the selected one to the video conference processor as sharing data to be provided to a video conference that the target video conference terminal belongs to, after the pairing step.

27. The method of claim 25, further comprising a step in which the pairing manager manages a list of video conference terminals that have transmitted a predetermined pairing-request code of the at least one video conference terminal as a pairing list, wherein the pairing request step includes:
a step in which a network connector of the MCU connects to the user terminal in a wired or wireless type;
a step in which the pairing manager receives a request to provide the pairing list from the user terminal and provides the requested pairing list; and
determining that there is the pairing request when the pairing manager receives selection information of the target video conference terminal selected from the pairing list from the user terminal.

28. The method of claim 27, further comprising a step in which the pairing manager provides pairing completion information using at least one signal selected from a video signal and a voice signal to the target video conference terminal and waits for a pairing-confirmation code; and
a step in which the pairing manager approves the pairing request when receiving the pairing-confirmation code from the target video conference terminal.

29. The method of claim 27, wherein a list of video conference terminals that have transmitted predetermined identification information is included together with the pairing-request code in the pairing list.

30. The method of claim 25, wherein the pairing manager, in the pairing request step, receives a predetermined pairing-request code from the target video conference terminal, creates and registers a PIN number corresponding to the pairing-request code, and then provides the PIN number to the target video conference such that the PIN number is output; and
in the pairing step, when receiving the pairing request including the PIN number from the user terminal, the pairing manager approves pairing by comprising the PIN number with the registered PIN number.

31. The method of claim 30, wherein the pairing manager provides the PIN number in the type of video signal or a voice signal to the target video conference terminal using Interactive Voice and Video Response (IVVR).

32. An application stored in a computer-readable storage medium for performing operation of the video conference processor and the pairing manager in the method of controlling a video conference of any one of claims 25 to 31.

33. A software distribution server comprising a computer-readable storage medium storing software for performing operation of video conference processor and the pairing manager in the method of controlling a video conference of any one of claims 25 to 31, and enabling the MCU to download the software when the MCU connects through the Internet.

34. A method of controlling a video conference of a video conference including an MCU and at least one video conference terminal connecting to the MCU, the method comprising:
a pairing request step in which a user terminal connects to the MCU in a wired or wireless type and then requests pairing with a target video conference terminal to the MCU;
a pairing step in which the MCU approves the pairing request of the user terminal, whereby the user terminal is connected to a manager page of the MCU, in which the user terminal is not directly connected to the target video conference terminal even by the pairing; and
a control step in which the user terminal request control allowed by the manager page to the MCU and the MCU performs the control.
